# EUROPEAN PATENT SPECIFICATION

(11) **EP 4 575 251 B1**
(45) Date of publication and mention of the grant of the patent: **02.09.2026**
(21) Application number: 23217477.1
(22) Date of filing: 18.12.2023
(51) Int. Cl.: F16C 25/06, F03D 80/70

(54) **BEARING ARRANGEMENT FOR A ROTATING COMPONENT OF A WIND TURBINE**
LAGERANORDNUNG FÜR EIN ROTIERENDES BAUTEIL EINER WINDENERGIEANLAGE
AGENCEMENT DE PALIER POUR UN COMPOSANT ROTATIF D'UNE ÉOLIENNE

(43) Date of publication of application: 25.06.2025
(73) Proprietor: Nordex Energy SE & Co. KG, 22419 Hamburg (DE)
(72) Inventor: Harich, Martin, 22419 Hamburg (DE)
(74) Representative: Völkl Siebenson Patentanwälte - Partnerschaft mbB

(56) References cited:
- JP-A- 2006 177 268
- US-A1- 2015 030 277
- US-A1- 2020 362 917

## Description

The invention relates to a bearing arrangement for a rotating component of a wind turbine.

Wind turbines with wind turbine rotor blades (hereinafter also referred to as rotor blades) are well known in the prior art and are used to convert wind energy into electrical energy.

In wind turbines, there are direct drive concepts in which the rotational motion of the rotor hub is transmitted directly and immediately to a rotating shaft of a generator. Alternatively, there are drive train concepts in which a gearbox is connected between the rotor hub and the generator, wherein the gearbox is connected to the rotor hub via a rotor shaft.

A technical challenge for wind turbines of this type, which are designed for a power range of several megawatts of electrical power, for example, is the provision of a bearing arrangement that meets high technical requirements, such as high bending stiffness, a clearance-free bearing arrangement, low-wear kinematics and the simplest possible assembly combined with high cost-efficiency.

It is known to use roller bearings, e.g. tapered roller bearings, to support rotating components of wind turbines, like the rotor shaft. Some roller bearings such as tapered roller bearings are designed to work in pairs. These tapered roller bearings are pretensioned, which means that even with no external load they have a minimum load to allow all rolling elements of the roller bearings to interact with the raceways. This is advantageous in terms of load distribution and contributes to an improved lifetime. This pretension should be kept within narrow limits so that, on the one hand, the positive effect of all rolling elements being in contact with the raceways is ensured and, on the other hand, the roller bearings are not overloaded.

US 2015/030277 A1 relates to a wind turbine bearing arrangement which is configured as a main bearing for a rotor of a wind turbine. The bearing arrangement comprises a stator unit and a rotor unit, wherein the stator unit and the rotor unit are mounted on one another via a rotor-side bearing and a tower-side bearing. The rotor-side bearing and the tower-side bearing are arranged spaced apart from one another and each comprise an inner bearing ring and an outer bearing ring. A preload circuit is formed by the rotor-side bearing, the tower-side bearing and the stator unit, wherein a base preload is set during assembly via the preload circuit. The inner bearing ring or the outer bearing ring is configured as a bearing clamping ring. Furthermore, the bearing arrangement comprises an adjusting device having a clamping ring, by means of which a preload acting on the bearing clamping ring can be changed relative to the base preload, such that the preload of the rotor-side bearing and the tower-side bearing is adjustable via the preload circuit.

US 2020/362917 A1 relates to, an assembly tool for positioning the rolling elements of a bearing assembly during a preloading operation includes a roller seating actuator configured to be removably coupled to a portion of the bearing assembly during the preloading operation, and a roller seating ring movably coupled to the roller seating actuator. The roller seating ring includes a distal end configured to engage an end of a rolling element of the bearing assembly. A biasing member is positioned between the roller seating actuator and the roller seating ring and biases the roller seating ring away from the roller seating actuator such that the distal end of the roller seating ring engages and presses the rolling element axially into engagement with a rib of a race of the bearing assembly.

JP 2006 177268 A relates to a structure which is capable of preventing the range of wind speeds suitable for power generation by a wind power generator from becoming narrow, while at the same time ensuring the durability life of tapered roller bearings that support a main shaft connected to and fixed on a rotor.

One task underlying the invention is to develop a concept for a bearing arrangement to support a rotating element of a wind turbine, which contributes to an efficient adjustment of the level of pretension.

This object is solved by the independent claim. Advantageous embodiments are given in the sub-claims.

A bearing arrangement is disclosed, in particular a rotor bearing arrangement, for a rotating component of a wind turbine, in particular for a rotor shaft. The bearing arrangement comprises a first roller bearing and a second roller bearing. The bearing arrangement comprises the rotating component having a rotational axis, wherein the rotating component is supported by the first roller bearing and the second roller bearing. A stationary component is provided, in particular a bearing housing, for supporting the first roller bearing and the second roller bearing. The first roller bearing, the second roller bearing, the rotating component and the stationary component are arranged to form a pretension circuit. The first roller bearing comprises a first bearing inner ring, a first bearing outer ring and rolling elements arranged between the first bearing inner ring and the first bearing outer ring. The bearing arrangement comprises a pretensioning device being configured such that, upon actuation, the pretensioning device causes a resulting force onto the first bearing inner ring or the first bearing outer ring to adjust the pretension of the bearing arrangement. Upon actuation of the pretensioning device the first bearing inner ring or the first bearing outer ring is axially moved along the rotational axis with respect to the stationary component, and/or radially deformed with respect to the rotational axis, wherein the resulting force is unevenly distributed over a circumference of the first roller bearing with respect to the rotational axis.

As indicated above, a predetermined pretension of the bearing arrangement is necessary and is initially set, e.g. during assembly or installation in the field. For example, a mean value of pretension is used as a reference value. For different reasons, an adjustment of the pretension can be necessary, for example due to wear. Therefore, it is necessary and advantageous to control and adjust the level of pretension, not only during the production/mounting, but even during operation/maintenance.

The pretension is applied by the pretensioning device by moving/deforming parts (e.g. bearing inner or outer ring).

Thereby, an associated friction has to be overcome. This friction is mainly influenced by radial forces which are part of the load acting on the bearing arrangement and in particular on the first roller bearing. These radial forces are mainly associated with a static load which is caused by the rotor weight. Preferably, the pretensioning device acts on the stationary ring of the first roller bearing, either the outer ring or the inner ring.

The invention takes into account that the load acting on the bearing arrangement, in particular on the first roller bearing, is not homogenous around the circumference, but is uneven mainly due to the rotor weight causing a static load acting mainly in a radial direction, such that the friction to be overcome is uneven around the circumference. In order to compensate for the uneven load, the resulting force of the pretensioning device is unevenly distributed over the circumference. Thus, an optimized pretension distribution around the circumference of the first roller bearing and thus the bearing arrangement can be achieved. This solution serves to achieve all the benefits of the pretension and in particular contributes to reducing wear and to optimizing the lifetime of the bearing arrangement. This solution allows a resulting force distribution to be adapted according to what is needed to overcome the friction. Thus, the distribution of pretensioning force can be optimized.

The first roller bearing and the second roller bearing can be distant from one another in the axial direction. The first roller bearing is preferably the rear bearing, meaning that the first roller bearing is arranged at a gearbox side, facing the gearbox of the wind turbine. The second bearing comprises a second bearing inner ring, a second bearing outer ring, and rolling elements therebetween. The second roller bearing is preferably facing the rotor side.

The pretension circuit means that the two roller bearings, e.g. tapered roller bearings, the rotating component and the bearing housing are formed and configured such that these elements can be/are pretensioned against each other.

The stationary component can be named "stator". Preferably, the stationary component is the bearing housing. For example, the bearing housing is the outer housing, being arranged facing the outside of the bearing arrangement. In other words, the bearing housing is arranged away from the rotational axis.

According to the invention, upon actuation of the pretensioning device, the first bearing inner ring or the first bearing outer ring is axially moved along the rotational axis with respect to the stationary component, and/or radially deformed with respect to the rotational axis. For example, the first bearing inner ring or first bearing outer ring is axially moveable along the rotational axis, which means along a direction parallel to the rotational axis. Alternatively or additionally, the first bearing outer ring is deformed in a radial direction with respect to the rotational axis. In any case, the movement or deformation is caused by actuation of the pretensioning device, wherein a mechanical force is transferred onto the first bearing outer ring or first bearing inner ring, either directly or indirectly.

According to an embodiment, a homogeneous pretension can be adjusted over the circumference of the first rolling bearing by the unevenly distributed resulting force. This contributes to the above functions and advantages and offers a simple way of implementing the invention. For example, predicting or calculating the resulting force leading to the homogeneous pretension is easy compared to an inhomogeneous pretension. Further, setting a homogeneous pretension is comparably easy to set or adjust via the pretensioning device.

According to an embodiment, an inhomogeneous pretension can be adjusted over the circumference of the first rolling bearing by the unevenly distributed resulting force. Thus, by providing an uneven resulting force an unevenly distributed pretension is provided, which could be beneficial in certain circumstances. In particular, such an arrangement could provide an optimized pretension distribution for facing situations in which the load acting on the bearing arrangement is such that a specific bearing area may experience a loss of pretension, thus leading to a risk of slippage in said specific bearing area. For example, the inhomogeneous pretension can be adjusted over the circumference of the first rolling bearing by the unevenly distributed resulting force such that the pretension force is higher in the lower bearing area than in the higher bearing area. Thus, the risk of slippage in the lower bearing area can be reduced.

According to an embodiment, the pretensioning device is either force-controlled or displacement-controlled for applying the uneven force. This means that the pretensioning device is either set to exert a non-uniform force around the circumference of the first roller bearing and/or is set to provide a non-uniform displacement of the first bearing inner/outer ring so that the non-uniform load on the bearing is compensated for to realize said pretension target.

According to an embodiment, the pretensioning device is located between the first roller bearing and the second roller bearing with respect to the rotational axis. Thus, the pretensioning device can be easily accessed from outside the bearing housing and it is not necessary to access the pretensioning device from the gearbox side.

According to an embodiment, the pretensioning device comprises several single adjustment devices, which are configured to be actuated to commonly cause the resulting force. For example, the adjustment devices are screws, hydraulic cylinders, piezo elements, pneumatic elements or thermocouples. These adjustment devices are arranged along the circumference of the first bearing outer ring or first bearing inner ring, more specifically the outer ring or the inner ring at the gearbox side.

According to an embodiment, the adjustment devices have the same structure but are unevenly distributed around the circumference of the first roller bearing.

According to an embodiment, the adjustment devices are evenly distributed around the circumference of the first roller bearing but are constructed or actuated differently to generate the uneven resulting force.

According to an embodiment, each adjustment device extends through an opening of the stationary component and is accessible from outside the stationary component. The mentioned opening goes through an entire wall (portion) of the bearing housing, e.g. in contrast to a blind hole. The opening is designed such that actuation of the adjustment device is possible. In other words, the opening needs to be large enough to allow actuation, i.e. movement, of the actuation device. For example, the opening is slit-shaped and runs over at least a portion of the bearing housing circumferentially around the rotational axis.

According to an embodiment, each adjustment device is arranged inside the stationary component.

According to an embodiment, each adjustment device directly acts on the first bearing inner ring or the first bearing outer ring. Thus, no further component(s) is/are arranged between an adjustment device and the respective bearing ring.

According to an embodiment, a ring-shaped force transfer element is provided between the adjustment devices and the first bearing inner ring or the first bearing outer ring, such that a force, which is set or adjusted upon actuation of each adjustment device, can be transferred between the adjustment devices and the first bearing inner ring or the first bearing outer ring. For example, the force transfer element is formed homogenously around the circumference of the first roller bearing.

According to an embodiment, the pretensioning device comprises a hydraulic ring piston, which is arranged in the stationary component around the rotational axis and is in direct contact with the first bearing outer ring, wherein the hydraulic ring piston has a different radial extension along the circumference of the first roller bearing with respect to the rotational axis such that a hydraulic force, which is set or adjusted to act on the hydraulic ring piston, is transferred between the hydraulic ring piston and the first bearing outer ring to cause the unevenly distributed resulting force. Thus, for example, the pretension of the bearing arrangement can be adjusted very precisely.

According to an embodiment, the pretensioning device comprises several hydraulic ring piston segments, which extend inside the stationary component around the rotational axis to form a common segmented ring and are each in direct contact with the first bearing outer ring, wherein the hydraulic ring piston segments are spaced apart from each other and have a different arcuate extension around the rotational axis, such that a hydraulic force, which is set or adjusted to act on the hydraulic ring piston segments, is transferred between the hydraulic ring piston segments and the first bearing outer ring to cause the unevenly distributed resulting force. The ring piston segments are differently formed with respect to an extension along the circumference of the first roller bearing.

According to an embodiment, the pretensioning device comprises a clamping ring, which surrounds the rotating element at an end face thereof in a form-fit manner and which has a radially inwardly extending shoulder which abuts the end face of the rotating element axially with respect to the rotational axis, wherein the clamping ring is screwed to the end face of the rotating element by means of several adjustment screws in such a way that the clamping ring is pressed against the first bearing inner ring to cause the unevenly distributed resulting force.

Regarding the above embodiments, in particular with regard to the different embodiments of the adjustment devices, we refer to two European patent applications (EP application numbers 23 17 8381 and 23 17 8382) for further details, which are incorporated into the writing in its entirety in order to avoid unnecessary repetition.

Further advantages, features and further developments are set out by the following exemplary embodiments which are explained in conjunction with the figures. The same or similar elements or elements acting in the same way are provided with the same reference numerals in the figures, wherein:
Fig. 1 shows a schematic illustration of a wind turbine,
Fig. 2 shows a simplified, partial illustration of a bearing arrangement in a final mounted position with a gearbox connected between the bearing arrangement and a generator according to the prior art, and
Fig. 3 to 8 show schematic sectional views of bearing arrangements according to embodiments of the invention.

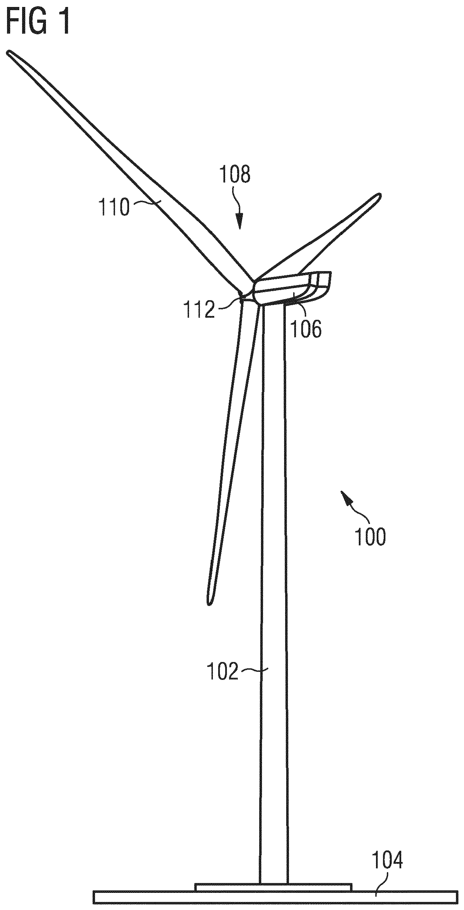

Figure 1 shows a schematic view of a wind turbine 100, which comprises a tower 102. The tower 102 is fixed to the ground by means of a foundation 104. A nacelle 106 is rotatably mounted at one end of the tower 102 opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

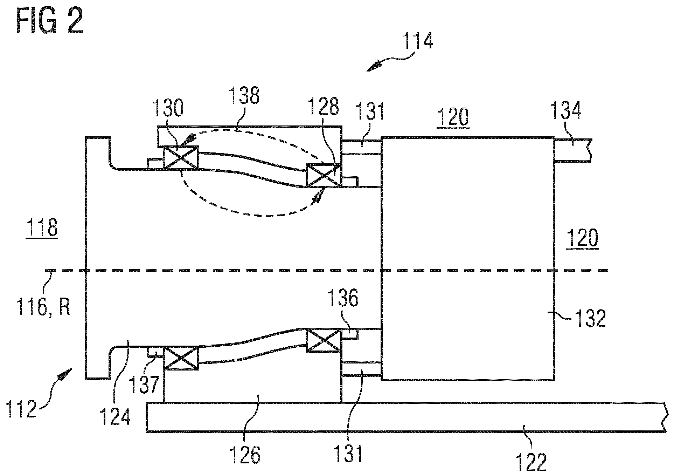

Fig. 2 shows a simplified representation of an exemplary embodiment of a bearing arrangement 114 within wind turbine 100. The bearing arrangement 114 extends in the longitudinal axis 116 along an axis of rotation R from a front rotor side 118 to a rear side 120 (gearbox/generator side). The bearing arrangement 114 generally has a rotor shaft 124 as a rotor or rotating component, the rotor shaft 124 being connected to the rotor hub 112 (not illustrated) at the front rotor side 118 of the bearing arrangement 114. Furthermore, the bearing arrangement 114 has a bearing housing 126 as a stationary component, the bearing housing 126 being connected to a machine frame 122. The rotor shaft 124 and the bearing housing 126 are rotatably mounted on one another via two bearings, namely a gearbox-side bearing 128 (first bearing) and a rotor-side bearing 130 (second bearing). Typically, the two bearings are tapered roller bearings.

The rotor shaft 124 rotates in operation about the axis of rotation R (rotational axis), whereas the bearing housing 126 is fixedly connected to the machine frame 122. In the shown embodiment according to Fig. 2 the rotor shaft 124 is connected to a gearbox 132, in particular to a gearbox input shaft (not shown). The bearing housing 126 is connected to the gearbox 132, in particular to a housing of the gearbox 132, via a torque support arrangement 131. The presence of the torque support arrangement between the bearing housing 126 and the gearbox 132 renders access to the bearing arrangement from the gearbox side difficult or impossible. The gearbox 132 is connected to a generator (not shown) via an output shaft 134 of the gearbox 132.

In an alternative non-illustrated embodiment, the bearing housing 126 is connected to a gearbox-generator assembly via a torque support arrangement. The gearbox-generator assembly corresponds in particular to a gearbox in which a generator is integrated. In a further non-illustrated embodiment, the wind turbine 100 does not comprise any gearbox (direct drive concept), such that the bearing housing 126 is connected to a generator via a torque support arrangement.

Referring again to the embodiment of Fig. 2, at the first bearing 128 at the tapered end of the rotor shaft 124, a pretensioning member designed as a pretension ring 136 is arranged which acts on the respective first bearing 128 in the longitudinal axis 116 with a biasing force, so that the entire bearing arrangement 114 is biased and thus no clearance is provided in both the axial direction and in the radial direction with respect to the axis of rotation R. The pretensioning member may alternatively be designed e.g. as a shaft nut. The pretensioning force generated by the pretension ring 136 is transmitted via the respective first bearing 128 on the bearing housing 126, from there via the opposite second bearing 130 on the rotor shaft 124. The rotor shaft 124 typically comprises a shoulder 137 which serves as an axial abutment for the second bearing 130 on the front rotor side 118. The pretensioning force is then transmitted from the rotor shaft 124 back to the first bearing 128. Thus, a pretension circuit 138 is formed by these components, which is exemplified by the dotted lines in Fig. 2.

The bearing arrangement 114 including rotor shaft 124, bearing housing 126, bearings 128, 130 and pretension ring 136 is typically a preassembled unit, which is typically supplied in the assembled state to the site of the wind turbine and is finally mounted there with the rotor hub 112 and the machine frame 122. Alternately, at least part of the components of the bearing arrangement 114 may be separately supplied to the site of the wind turbine and assembled to the remaining components of the bearing arrangement 114 on site.

In the following, embodiments of the invention are described which focus on an improved pretensioning mechanism.

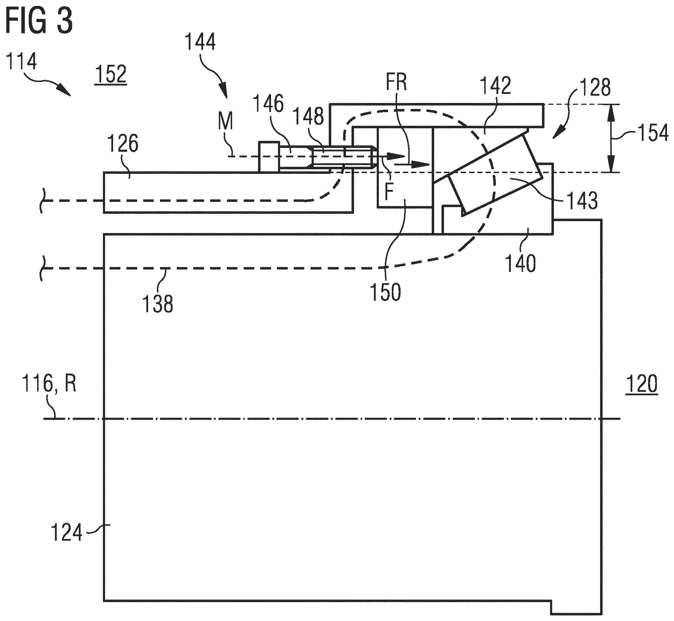

Fig. 3 shows a schematic bearing arrangement 114 according to an embodiment of the invention. The bearing arrangement 114 is generally of the type as described with reference to Fig. 2 above. The bearing arrangement 114 has a bearing housing 126, a rotor shaft 124 (corresponding to a rotating component), a first roller bearing 128 and a second roller bearing 130 (not shown for the sake of overview). The bearing arrangement 114 has a longitudinal axis 116 and the rotor shaft 124 rotates around a rotational axis R. The bearing housing 126 supports the first and the second roller bearings 128 and 130. The first and the second roller bearings 128 and 130 support the rotor shaft 124. The first roller bearing 128 and the second roller bearing 130 are tapered roller bearings and are arranged in the so-called "O"-arrangement. The first roller bearing 128 is arranged at the rear side 120 (generator side or gearbox side). At the rear side 120, the rotor shaft 124 is connected to a gearbox (not shown). The first roller bearing 128 comprises a first bearing inner ring 140, a first bearing outer ring 142 and rolling elements 143 arranged and supported between the first bearing inner ring 140 and the first bearing outer ring 142.

In an installed state within the wind turbine 100, the bearing arrangement 114 is operated such that a rotation of the rotor 108 drives the rotor shaft 124. The rotation of the rotor shaft 124 is transferred to the gearbox, via which a generator is driven to generate electrical energy.

The bearing arrangement 114 of Fig. 3 is generally pretensioned as described above and in accordance with Fig. 2, wherein instead of the pretension ring 136 another pretensioning device is used. In this regard, the first roller bearing 128, the second roller bearing 130, the rotor shaft 124 and the bearing housing 126 are designed and arranged to form a pretension circuit 138.

A pretensioning device 144 is provided to set/adjust the pretension of the bearing arrangement 114, i.e. to adjust the pretension of the formed pretension circuit 138. The pretensioning device 144 comprises several single adjustment devices 146 arranged circumferentially around the first roller bearing 140 with respect to the rotational axis R (only one adjustment device 146 shown). The first bearing outer ring 142 can be axially moved via the adjustment devices 146, i.e. in a direction parallel to the rotational axis R. In the shown embodiment, the adjustment devices 146 are screws (also called "pressure screws"). Each screw has an at least partially threaded screw shaft and is screwed into a corresponding opening 148 (here: through-hole) of the bearing housing 126 and is arranged such that it can be moved along a moving direction M wherein, in the present example, the moving direction M runs parallel to the rotational axis R, i.e. at an angle of 0° with respect to the rotational axis R.

A force transfer element 150 is arranged between the adjustment devices 146 and the first bearing outer ring 142. The force transfer element 150 is a ring member extending circumferentially around the rotational axis R. For example, the force transfer element 150 is washer-like and can also be called a pressure ring. The force transfer element 150 is axially moveable along the rotational axis R.

In the pretensioned state as shown, the adjustment devices 146 are in direct contact with the force transfer element 150, wherein the latter is in direct contact with the first bearing outer ring 142.

To adjust the pretension of the bearing arrangement 114, the screws 146 are actuated, i.e. torque is applied to the screws 146. To increase the pretension, the screws 146 are actuated (turned) such that they are moved (further) against the force transfer element 150 (towards the right in Fig. 3). Thus, a force F of each screw 146 is increased and this force F is transferred to the force transfer element 150. The force transfer element 150 is configured to distribute the load onto the first bearing outer ring 142, such that a resulting force FR acts on the first bearing outer ring 142. This causes axial movement/displacement of the first bearing outer ring 142 and thus impacts the pretension circuit 138. The pretension of the bearing arrangement 114 is thus adjusted.

Similarly, each screw 146 can be actuated such that it is moved away from the first bearing outer ring 142 and the force transfer element 150, meaning that the pretension can be reduced.

As can be seen from Fig. 3, the screws 146 are arranged between the first roller bearing 128 and the second roller bearing. Thus, the screws 146 are easily accessible from outside 152 of the bearing arrangement 114. For adjustment of the pretension, it is thus not necessary to gain access from the rear (gearbox) side 120, which is particularly problematic after the bearing arrangement 114 has been installed in the wind turbine 100 and/or during operation of the wind turbine 100.

In the shown embodiment, the bearing housing 126 comprises a step 154 so that the screws 146 can be accommodated. Of course, other designs of the bearing housing 126 and or arrangements of the screws 146 are applicable.

With the screws 146, a very precise adjustment of the pretension is possible. Preferably, fine threads are used to allow fine tuning of the pretension, i.e. only fractions of a mm.

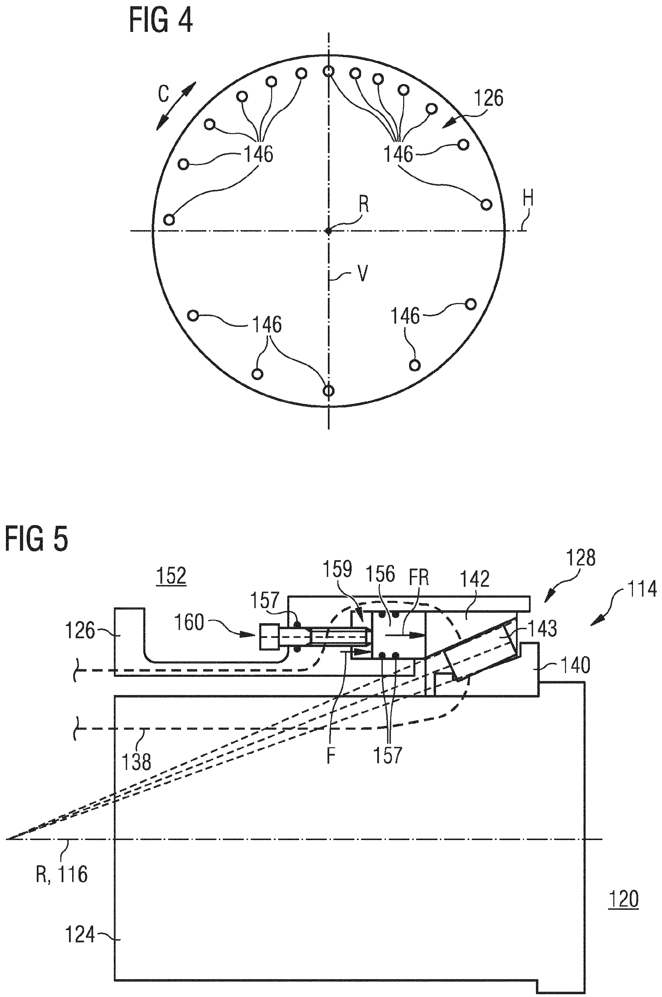

Particularly noteworthy in bearing arrangement 114 is the fact that the pretensioning device 144 is configured such that the resulting force FR caused by the screws 146 is unevenly distributed over the circumference of the first roller bearing 128, as schematically indicated in figure 4. Figure 4 shows a cross-sectional schematic view of the bearing arrangement 114, wherein the cross section runs in normal direction to the rotational axis R. The bearing arrangement 114 as shown represents an intended installation state within the wind turbine 100. Further, a vertical plane V and a horizontal plane H are illustrated. As can be seen, in circumferential direction C several adjustment devices 146 are arranged entering through the bearing housing 126. In the intended installed state of the bearing arrangement 114, more adjustment devices 144 are arranged above the horizontal plane H, in which the rotational axis R runs, than below the horizontal plane H. This configuration allows the resulting force FR to be unevenly distributed in order to compensate for the inhomogeneous loads acting on the bearing arrangement 114, as described in the introductory portion. If each screw 146 is essentially equally actuated, e.g. turned, the resulting force FR is unevenly distributed since the screws 146 are unevenly distributed around the circumference. By this measure, the pretension of the bearing arrangement 114 can be evenly distributed over the whole first bearing outer ring 142. In other words, the pretension is homogeneously set/adjusted over the circumference of the first roller bearing 128.

Alternatively, with the described arrangement it is possible that a predetermined uneven pretension is achieved with an unevenly distributed resulting force FR.

In the described embodiment with regard to figures 3 and 4, the adjustment devices 146 have the same structure and are unevenly distributed around the circumference of the first roller bearing. In an alternative example, in order to achieve the uneven distribution of the resulting force FR, the adjustment devices 146 are evenly distributed around the circumference of the first roller bearing 128, but are constructed or actuated differently to generate the uneven resulting force FR.

The pretensioning device 144, i.e. the screws 146, can be force-controlled or displacement-controlled.

Instead of acting on the force-transfer element 150, the screws 146 could also act directly on the first bearing outer ring 142.

Alternatively, the pretensioning device 144, e.g. the screws 146, could directly or indirectly provide a force F onto the first bearing inner ring 140. For example, a pretension ring (see ring 136 in figure 2 as described above) can be used for pretension of the first roller bearing 128.

The adjustment devices 146 can be designed and arranged differently. Further, the transfer of their forces onto the first roller bearing 128 can be carried out differently, e.g. via wedged shaped force transfer elements and so on. In this regard, we refer to the already named prior applications (EP application numbers 23 17 8381 and 23 17 8382).

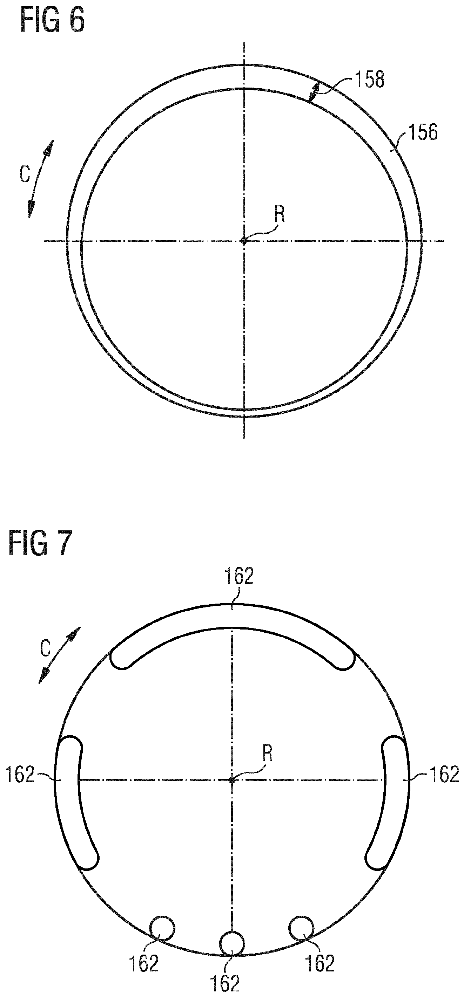

Figures 5 and 6 show a further embodiment of the invention, which differs regarding the pretensioning device 144 and the adjustment of the pretension. Thus, the above description of the features similarly applies, unless otherwise stated below. For the sake of clarity, however, not all reference signs are necessarily reproduced in the figures and described again.

As a main difference, the pretensioning device 144 comprises a hydraulic ring piston 156, which is arranged in the bearing housing 126 around the rotational axis R and is in direct contact with the first bearing outer ring 142. The hydraulic ring piston 156 has a different radial extension 158 (in other words thickness) along the circumferential direction C of the first roller bearing 128 with respect to the rotational axis R. A hydraulic force F can now be applied to the ring piston 156 by a hydraulic system connected to the housing 126 (not shown in figure 5). The hydraulic force F is generated by introducing a pressurized hydraulic fluid into a chamber 159 formed by the hollow space between the bearing housing 126 and the ring piston 156. O-ring seals 157 are provided between the ring piston 156 and the bearing housing 126 and between the screws 160 and the bearing housing 126 in order to prevent the hydraulic fluid from leaking out of the chamber 159. This hydraulic force F is transferred between the hydraulic ring piston 156 and the first bearing outer ring 142 and causes the unevenly distributed resulting force FR due to the inhomogeneous radial extension 158. One or more locking screws 160 are provided to hold the hydraulic ring piston in position and thus the pretension of the bearing arrangement 114 is maintained after having applied the hydraulic force F. This allows the hydraulic force to be released afterwards and the hydraulic system to be removed.

Figure 7 shows a further embodiment of the invention, which is similar to the above-described embodiment with respect to figures 5 and 6. Thus, the above description of the features and the shown embodiment of figure 5 similarly apply, unless otherwise stated below. As a difference to the above, the pretensioning device 144 comprises several hydraulic ring piston segments 162 which extend inside the bearing housing 162 around the rotational axis R to form a common segmented ring and are each in direct contact with the first bearing outer ring 142. The hydraulic ring piston segments are spaced apart from each other in the circumferential direction C and have a different arcuate extension around the rotational axis R. A hydraulic force F, which is set or adjusted to act on the hydraulic ring piston segments 162, is transferred between the hydraulic ring piston segments 162 and the first bearing outer ring 142 to cause the unevenly distributed resulting force FR, in particular due to the differently designed segments 162. Again, locking screws 160 are used to hold the position of the ring segments 162 and thus to maintain the pretension of the bearing arrangement 114.

This embodiment enables higher forces at the same pressure and with the same radial space. An adaptation of necessary force can be achieved by providing different ring piston segments in the circumferential direction C (even ring piston segments can be used being only cylinders, e.g. at a bottom side of the first roller bearing 128).

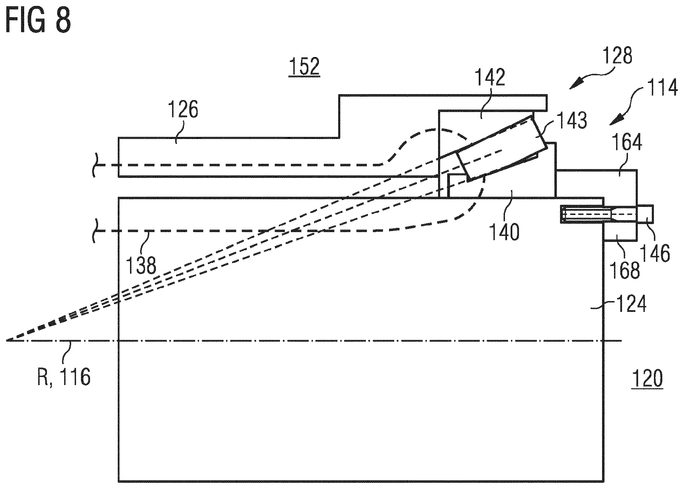

Figure 8 shows a further embodiment of the invention, which differs regarding the pretensioning device 144 and the adjustment of the pretension. Thus, the above description of the features similarly applies, unless otherwise stated below. For the sake of clarity, however, not all reference signs are necessarily reproduced in the figures and described again.

In the embodiment of figure 8 the bearing arrangement comprises a stationary shaft 124 as a stationary component and a rotating bearing housing 126 as a rotating component. The pretension device 144 is arranged at the stationary shaft 124. Therefore, similarly to the above embodiments, the pretension device 144 is arranged at the stationary component. The pretensioning device 144 comprises a clamping ring 164, which surrounds the stationary shaft 124 at an end face 166 thereof in a form-fit manner and which has a radially inwardly extending shoulder 168. The shoulder 168 abuts the end face 166 of the stationary shaft 124 axially with respect to the rotational axis R. The clamping ring 164 is screwed to the end face 166 of the stationary shaft 124 by means of several adjustment screws 146 in such a way that the clamping ring 164 is pressed against the first bearing inner ring 140 to cause the unevenly distributed resulting force FR.

### Reference signs

- 100: wind turbine
- 102: tower
- 104: foundation
- 106: nacelle
- 108: rotor
- 110: rotor blade
- 112: rotor hub
- 114: bearing arrangement
- 116: longitudinal direction
- 118: front rotor side
- 120: rear side
- 122: machine frame
- 124: rotor shaft, stationary shaft
- 126: bearing housing, rotating bearing housing
- 128: first bearing
- 130: second bearing
- 131: torque support arrangement
- 132: gearbox
- 134: output shaft
- 136: pretension ring
- 137: shoulder
- 138: pretension circuit
- 140: first bearing inner ring
- 142: first bearing outer ring
- 143: rolling element
- 144: pretensioning device
- 146: adjustment device
- 148: opening
- 150: force transfer element
- 152: outside
- 154: step
- 156: hydraulic ring piston
- 157: O-ring seal
- 158: radial extension
- 159: chamber
- 160: locking screws
- 162: hydraulic ring piston segments
- 164: clamping ring
- 166: end face
- 168: shoulder
- C: circumferential direction
- F: force
- H: horizontal plane
- FR: resulting force
- M: moving direction
- R: rotational axis
- V: vertical plane

## Claims

1. Bearing arrangement (114), in particular a rotor bearing arrangement (114), for a rotating component of a wind turbine (100), comprising
- a first roller bearing (128) and a second roller bearing (130),
- the rotating component having a rotational axis (R), the rotating component being supported by the first roller bearing (128) and the second roller bearing (130), and
- a stationary component, in particular a bearing housing (126), supporting the first roller bearing (128) and the second roller bearing (130), wherein
the first roller bearing (128), the second roller bearing (130), the rotating component and the stationary component are arranged to form a pretension circuit (138), and
the first roller bearing (128) comprises a first bearing inner ring (140), a first bearing outer ring (142) and rolling elements (143) arranged between the first bearing inner ring (140) and the first bearing outer ring (142),
- a pretensioning device (144) being configured such that, upon actuation, the pretensioning device (144) causes a resulting force (FR) onto the first bearing inner ring (140) or the first bearing outer ring (142) to adjust the pretension of the bearing arrangement (114), wherein upon actuation of the pretensioning device (144) the first bearing inner ring (140) or the first bearing outer ring (142) is axially moved along the rotational axis (R) with respect to the stationary component, and/or radially deformed with respect to the rotational axis (R), r
**characterised in that the** resulting force (FR) is unevenly distributed over a circumference of the first roller bearing (128) with respect to the rotational axis (R).

2. Bearing arrangement (114) according to claim 1, wherein a homogeneous pretension can be adjusted over the circumference of the first rolling bearing (128) by the unevenly distributed resulting force (FR).

3. Bearing arrangement (114) according to claim 1, wherein an inhomogeneous pretension can be adjusted over the circumference of the first rolling bearing (128) by the unevenly distributed resulting force (FR).

4. Bearing arrangement (114) according to any one of the preceding claims, wherein the pretensioning device (144) is either force-controlled or displacement-controlled for applying the uneven force.

5. Bearing arrangement (114) according to any one of the preceding claims, wherein the pretensioning device (144) is located between the first roller bearing (128) and the second roller bearing (130) with respect to the rotational axis (R).

6. Bearing arrangement (114) according to any one of the preceding claims, wherein the pretensioning device (144) comprises several single adjustment devices (146), which are configured to be actuated to commonly cause the resulting force (FR).

7. Bearing arrangement (114) according to claim 6, wherein the adjustment devices (146) have the same structure, but are unevenly distributed around the circumference of the first roller bearing (128).

8. Bearing arrangement (114) according to claim 6, wherein the adjustment devices (146) are evenly distributed around the circumference of the first roller bearing (128), but are constructed or actuated differently to generate the uneven resulting force (FR).

9. Bearing arrangement (114) according to any one of claims 6 to 8, wherein each adjustment device (146) extends through an opening (152) of the stationary component and is accessible from outside (158) the stationary component.

10. Bearing arrangement (114) according to any one of claims 6 to 8, wherein each adjustment device (146) is arranged inside the stationary component.

11. Bearing arrangement (114) according to any one of claims 6 to 10, wherein each adjustment device (146) directly acts on the first bearing inner ring (140) or the first bearing outer ring (142).

12. Bearing arrangement (114) according to any one of claims 6 to 10, wherein a ring-shaped force transfer element (156) is provided between the adjustment devices (146) and the first bearing inner ring (140) or the first bearing outer ring (142), such that a force (F), which is set or adjusted upon actuation of each adjustment device (146), can be transferred between the adjustment devices (146) and the first bearing inner ring (140) or the first bearing outer ring (142).

13. Bearing arrangement (114) according to any one of claims 1 to 5, wherein the pretensioning device (144) comprises a hydraulic ring piston (156), which is arranged in the stationary component around the rotational axis (R) and is in direct contact with the first bearing outer ring (142), wherein the hydraulic ring piston (156) has a different radial extension along the circumference of the first roller bearing (128) with respect to the rotational axis (R), such that a hydraulic force (F), which is set or adjusted to act on the hydraulic ring piston (156), is transferred between the hydraulic ring piston (156) and the first bearing outer ring (142) to cause the unevenly distributed resulting force (FR).

14. Bearing arrangement (114) according to any one of claims 1 to 5, wherein the pretensioning device (144) comprises several hydraulic ring piston segments (162) which extend inside the stationary component around the rotational axis (R) to form a common segmented ring and are each in direct contact with the first bearing outer ring (142), wherein the hydraulic ring piston segments (162) are spaced apart from each other and have a different arcuate extension around the rotational axis (R), such that a hydraulic force (F), which is set or adjusted to act on the hydraulic ring piston segments (162), is transferred between the hydraulic ring piston segments (162) and the first bearing outer ring (142) to cause the unevenly distributed resulting force (FR).

## Patentansprüche

1. Lageranordnung (114), insbesondere eine Rotorlageranordnung (114), für ein rotierendes Bauteil einer Windenergieanlage (100), umfassend
- ein erstes Wälzlager (128) und ein zweites Wälzlager (130),
- das rotierende Bauteil, das eine Drehachse (R) aufweist, wobei das rotierende Bauteil durch das erste Wälzlager (128) und das zweite Wälzlager (130) gelagert ist, und
- ein stationäres Bauteil, insbesondere ein Lagergehäuse (126), das das erste Wälzlager (128) und das zweite Wälzlager (130) lagert, wobei
das erste Wälzlager (128), das zweite Wälzlager (130), das rotierende Bauteil und das stationäre Bauteil angeordnet sind, um einen Vorspannkreis (138) zu bilden, und
das erste Wälzlager (128) einen ersten Lagerinnenring (140), einen ersten Lageraußenring (142) und Wälzkörper (143) umfasst, die zwischen dem ersten Lagerinnenring (140) und dem ersten Lageraußenring (142) angeordnet sind,
- eine Vorspannvorrichtung (144), die derart konfiguriert ist, dass bei Betätigung die Vorspannvorrichtung (144) eine resultierende Kraft (FR) auf den ersten Lagerinnenring (140) oder den ersten Lageraußenring (142) bewirkt, um die Vorspannung der Lageranordnung (114) einzustellen, wobei bei Betätigung der Vorspannvorrichtung (144) der erste Lagerinnenring (140) oder der erste Lageraußenring (142) axial entlang der Drehachse (R) in Bezug auf das stationäre Bauteil bewegt und/oder radial in Bezug auf die Drehachse (R) verformt wird,
**dadurch gekennzeichnet, dass** die resultierende Kraft (FR) über einen Umfang des ersten Wälzlagers (128) in Bezug auf die Drehachse (R) ungleichmäßig verteilt ist.

2. Lageranordnung (114) nach Anspruch 1, wobei eine homogene Vorspannung über den Umfang des ersten Wälzlagers (128) durch die ungleichmäßig verteilte resultierende Kraft (FR) eingestellt werden kann.

3. Lageranordnung (114) nach Anspruch 1, wobei eine inhomogene Vorspannung über den Umfang des ersten Wälzlagers (128) durch die ungleichmäßig verteilte resultierende Kraft (FR) eingestellt werden kann.

4. Lageranordnung (114) nach einem der vorhergehenden Ansprüche, wobei die Vorspannvorrichtung (144) zum Aufbringen der ungleichmäßigen Kraft entweder kraftgesteuert oder weggesteuert ist.

5. Lageranordnung (114) nach einem der vorhergehenden Ansprüche, wobei die Vorspannvorrichtung (144) in Bezug auf die Drehachse (R) zwischen dem ersten Wälzlager (128) und dem zweiten Wälzlager (130) angeordnet ist.

6. Lageranordnung (114) nach einem der vorhergehenden Ansprüche, wobei die Vorspannvorrichtung (144) mehrere einzelne Einstellvorrichtungen (146) umfasst, die konfiguriert sind, um betätigt zu werden, um gemeinsam die resultierende Kraft (FR) zu bewirken.

7. Lageranordnung (114) nach Anspruch 6, wobei die Einstellvorrichtungen (146) denselben Aufbau aufweisen, aber ungleichmäßig um den Umfang des ersten Wälzlagers (128) verteilt sind.

8. Lageranordnung (114) nach Anspruch 6, wobei die Einstellvorrichtungen (146) gleichmäßig um den Umfang des ersten Wälzlagers (128) verteilt sind, aber unterschiedlich konstruiert sind oder unterschiedlich betätigt werden, um die ungleichmäßige resultierende Kraft (FR) zu erzeugen.

9. Lageranordnung (114) nach einem der Ansprüche 6 bis 8, wobei sich jede Einstellvorrichtung (146) durch eine Öffnung (152) des stationären Bauteils erstreckt und von außerhalb (158) des stationären Bauteils zugänglich ist.

10. Lageranordnung (114) nach einem der Ansprüche 6 bis 8, wobei jede Einstellvorrichtung (146) innerhalb des stationären Bauteils angeordnet ist.

11. Lageranordnung (114) nach einem der Ansprüche 6 bis 10, wobei jede Einstellvorrichtung (146) direkt auf den ersten Lagerinnenring (140) oder den ersten Lageraußenring (142) wirkt.

12. Lageranordnung (114) nach einem der Ansprüche 6 bis 10, wobei ein ringförmiges Kraftübertragungselement (156) zwischen den Einstellvorrichtungen (146) und dem ersten Lagerinnenring (140) oder dem ersten Lageraußenring (142) vorgesehen ist, derart, dass eine Kraft (F), die bei Betätigung jeder Einstellvorrichtung (146) festgelegt oder eingestellt wird, zwischen den Einstellvorrichtungen (146) und dem ersten Lagerinnenring (140) oder dem ersten Lageraußenring (142) übertragen werden kann.

13. Lageranordnung (114) nach einem der Ansprüche 1 bis 5, wobei die Vorspannvorrichtung (144) einen hydraulischen Ringkolben (156) umfasst, der in dem stationären Bauteil um die Drehachse (R) angeordnet ist und in direktem Kontakt mit dem ersten Lageraußenring (142) steht, wobei der hydraulische Ringkolben (156) eine unterschiedliche radiale Erstreckung entlang des Umfangs des ersten Wälzlagers (128) in Bezug auf die Drehachse (R) aufweist, derart, dass eine hydraulische Kraft (F), die festgelegt oder eingestellt wird, um auf den hydraulischen Ringkolben (156) zu wirken, zwischen dem hydraulischen Ringkolben (156) und dem ersten Lageraußenring (142) übertragen wird, um die ungleichmäßig verteilte resultierende Kraft (FR) zu bewirken.

14. Lageranordnung (114) nach einem der Ansprüche 1 bis 5, wobei die Vorspannvorrichtung (144) mehrere hydraulische Ringkolbensegmente (162) umfasst, die sich innerhalb des stationären Bauteils um die Drehachse (R) erstrecken, um einen gemeinsamen segmentierten Ring zu bilden, und jeweils in direktem Kontakt mit dem ersten Lageraußenring (142) stehen, wobei die hydraulischen Ringkolbensegmente (162) voneinander beabstandet sind und eine unterschiedliche bogenförmige Erstreckung um die Drehachse (R) aufweisen, derart, dass eine hydraulische Kraft (F), die festgelegt oder eingestellt wird, um auf die hydraulischen Ringkolbensegmente (162) zu wirken, zwischen den hydraulischen Ringkolbensegmenten (162) und dem ersten Lageraußenring (142) übertragen wird, um die ungleichmäßig verteilte resultierende Kraft (FR) zu bewirken.

## Revendications

1. Agencement de palier (114), en particulier un agencement de palier de rotor (114), pour un composant rotatif d'une éolienne (100), comprenant
- un premier roulement à rouleaux (128) et un deuxième roulement à rouleaux (130),
- le composant rotatif ayant un axe de rotation (R), le composant rotatif étant porté par le premier roulement à rouleaux (128) et le deuxième roulement à rouleaux (130), et
- un composant stationnaire, en particulier un logement de palier (126), portant le premier roulement à rouleaux (128) et le deuxième roulement à rouleaux (130), dans lequel
le premier roulement à rouleaux (128), le deuxième roulement à rouleaux (130), le composant rotatif et le composant stationnaire sont agencés pour former un circuit de précontrainte (138), et
le premier roulement à rouleaux (128) comprend une première bague intérieure de roulement (140), une première bague extérieure de roulement (142) et des éléments roulants (143) agencés entre la première bague intérieure de roulement (140) et la première bague extérieure de roulement (142),
- un dispositif de précontrainte (144) étant configuré de telle sorte que, lors de l'actionnement, le dispositif de précontrainte (144) provoque une force résultante (FR) sur la première bague intérieure de roulement (140) ou la première bague extérieure de roulement (142) pour régler la précontrainte de l'agencement de palier (114), dans lequel, lors de l'actionnement du dispositif de précontrainte (144), la première bague intérieure de roulement (140) ou la première bague extérieure de roulement (142) est déplacée axialement le long de l'axe de rotation (R) par rapport au composant stationnaire, et/ou déformée radialement par rapport à l'axe de rotation (R),
**caractérisé en ce que** la force résultante (FR) est répartie de manière non uniforme sur une circonférence du premier roulement à rouleaux (128) par rapport à l'axe de rotation (R).

2. Agencement de palier (114) selon la revendication 1, dans lequel une précontrainte homogène peut être réglée sur la circonférence du premier roulement à rouleaux (128) par la force résultante (FR) répartie de manière non uniforme.

3. Agencement de palier (114) selon la revendication 1, dans lequel une précontrainte inhomogène peut être réglée sur la circonférence du premier roulement à rouleaux (128) par la force résultante (FR) répartie de manière non uniforme.

4. Agencement de palier (114) selon l'une quelconque des revendications précédentes, dans lequel le dispositif de précontrainte (144) est soit commandé en force soit commandé en déplacement pour appliquer la force non uniforme.

5. Agencement de palier (114) selon l'une quelconque des revendications précédentes, dans lequel le dispositif de précontrainte (144) est situé entre le premier roulement à rouleaux (128) et le deuxième roulement à rouleaux (130) par rapport à l'axe de rotation (R).

6. Agencement de palier (114) selon l'une quelconque des revendications précédentes, dans lequel le dispositif de précontrainte (144) comprend plusieurs dispositifs de réglage individuels (146), qui sont configurés pour être actionnés afin de provoquer conjointement la force résultante (FR).

7. Agencement de palier (114) selon la revendication 6, dans lequel les dispositifs de réglage (146) présentent la même structure, mais sont répartis de manière non uniforme autour de la circonférence du premier roulement à rouleaux (128).

8. Agencement de palier (114) selon la revendication 6, dans lequel les dispositifs de réglage (146) sont répartis de manière uniforme autour de la circonférence du premier roulement à rouleaux (128), mais sont construits ou actionnés différemment pour générer la force résultante (FR) non uniforme.

9. Agencement de palier (114) selon l'une quelconque des revendications 6 à 8, dans lequel chaque dispositif de réglage (146) s'étend à travers une ouverture (152) du composant stationnaire et est accessible depuis l'extérieur (158) du composant stationnaire.

10. Agencement de palier (114) selon l'une quelconque des revendications 6 à 8, dans lequel chaque dispositif de réglage (146) est agencé à l'intérieur du composant stationnaire.

11. Agencement de palier (114) selon l'une quelconque des revendications 6 à 10, dans lequel chaque dispositif de réglage (146) agit directement sur la première bague intérieure de roulement (140) ou la première bague extérieure de roulement (142).

12. Agencement de palier (114) selon l'une quelconque des revendications 6 à 10, dans lequel un élément de transmission de force en forme d'anneau (156) est prévu entre les dispositifs de réglage (146) et la première bague intérieure de roulement (140) ou la première bague extérieure de roulement (142), de telle sorte qu'une force (F), qui est fixée ou réglée lors de l'actionnement de chaque dispositif de réglage (146), peut être transmise entre les dispositifs de réglage (146) et la première bague intérieure de roulement (140) ou la première bague extérieure de roulement (142).

13. Agencement de palier (114) selon l'une quelconque des revendications 1 à 5, dans lequel le dispositif de précontrainte (144) comprend un piston annulaire hydraulique (156), qui est agencé dans le composant stationnaire autour de l'axe de rotation (R) et est en contact direct avec la première bague extérieure de roulement (142), dans lequel le piston annulaire hydraulique (156) présente une extension radiale différente le long de la circonférence du premier roulement à rouleaux (128) par rapport à l'axe de rotation (R), de telle sorte qu'une force hydraulique (F), qui est fixée ou réglée pour agir sur le piston annulaire hydraulique (156), est transmise entre le piston annulaire hydraulique (156) et la première bague extérieure de roulement (142) pour provoquer la force résultante (FR) répartie de manière non uniforme.

14. Agencement de palier (114) selon l'une quelconque des revendications 1 à 5, dans lequel le dispositif de précontrainte (144) comprend plusieurs segments de piston annulaire hydraulique (162) qui s'étendent à l'intérieur du composant stationnaire autour de l'axe de rotation (R) pour former un anneau segmenté commun et sont chacun en contact direct avec la première bague extérieure de roulement (142), dans lequel les segments de piston annulaire hydraulique (162) sont espacés les uns des autres et présentent une extension arquée différente autour de l'axe de rotation (R), de telle sorte qu'une force hydraulique (F), qui est fixée ou réglée pour agir sur les segments de piston annulaire hydraulique (162), est transmise entre les segments de piston annulaire hydraulique (162) et la première bague extérieure de roulement (142) pour provoquer la force résultante (FR) répartie de manière non uniforme.
